(19) Europäisches Patentamt
European Patent Office
Office européen des brevets

(11) Veröffentlichungsnummer: **0 332 989 B1**

(12) # EUROPÄISCHE PATENTSCHRIFT

(45) Veröffentlichungstag der Patentschrift: **20.01.93**

(51) Int. Cl.[5]: **C08L 69/00**, //(C08L69/00, 69:00)

(21) Anmeldenummer: **89103969.5**

(22) Anmeldetag: **07.03.89**

(54) **Thermoplastische Polycarbonatmischungen, aliphatische Polycarbonate enthaltend.**

(30) Priorität: **17.03.88 DE 3808836**

(43) Veröffentlichungstag der Anmeldung:
**20.09.89 Patentblatt 89/38**

(45) Bekanntmachung des Hinweises auf die Patenterteilung:
**20.01.93 Patentblatt 93/03**

(84) Benannte Vertragsstaaten:
**DE FR GB IT**

(56) Entgegenhaltungen:
**EP-A- 0 208 107**
**EP-A- 0 281 837**

**PATENT ABSTRACTS OF JAPAN, Band 11, Nr. 222 (C-435)[2669], 18 Juli 1987&NUM;**

(73) Patentinhaber: **BAYER AG**

**W-5090 Leverkusen 1 Bayerwerk(DE)**

(72) Erfinder: **Leitz, Edgar, Dr.**
**Goethestrasse 63**
**W-4047 Dormagen(DE)**
Erfinder: **Eichenauer, Herbert, Dr.**
**Gustav Heinemann-Strasse 3**
**W-4047 Dormagen(DE)**
Erfinder: **Ott, Karl-Heinz, Dr.**
**Paul Klee-Strasse 54**
**W-5090 Leverkusen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Gegenstand der vorliegenden Erfindung sind thermoplastische Polycarbonatmischungen enthaltend

1. thermoplastische, aromatische Polycarbonate und
2. aliphatische Polycarbonate mit Gewichtsmittelmolekulargewichten $\overline{M}w$ (gemessen mittels Ultrazentrifugation oder Lichtstreuung)von 15.000 bis 500.000, vorzugsweise von 20.000 bis 400.000.

Die Menge an aliphatischen Polycarbonat liegt zwischen 2 Gew.-% und 70 Gew.-%, vorzugsweise zwischen 3 Gew.-% und 45 Gew.-% und insbesondere zwischen 3 Gew.-% und 25 Gew.-%, bezogen jeweils auf Gewichtssumme aus aliphatischen Polycarbonat und thermoplastischem, aromatischem Polycarbonat.

Die Menge an aromatischen Polycarbonat liegt demzufolge zwischen 98 Gew.-%. und 30 Gew.-%, vorzugsweise zwischen 97 Gew.-% und 55 Gew.-% und insbesondere zwischen 97 Gew.-% und 75 Gew.-%, bezogen wiederum auf die Gewichtssumme aus aliphatischem und aromatischem Polycarbonat.

Aromatische Polycarbonate auf Basis Bisphenol A und Phosgen besitzen ausgezeichnete mechanische und thermische Eigenschaften. Aufgrund ihrer guten Zähigkeit, Wärmeformbeständigkeit und hohen Transparenz stellen sie vielseitig einsetzbare Werkstoffe dar.

Überraschenderweise wurde nun gefunden, daß Mischungen aus aromatischen Polycarbonaten und aliphatischen Polycarbonaten aromatische Homo-Polycarbonaten im Zähigkeitsniveau übertreffen. Gleichzeitig zeichnen sich die Polymermischungen durch ihre leichte Verarbeitbarkeit aus der Schmelze aus.

Erfindungsgemäß einzusetzende aliphatische Polycarbonate gemäß Komponente 2) sind vorzugsweise solche der Formel (I)

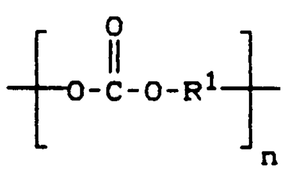

(I),

worin "n" eine ganze Zahl größer 40, vorzugsweise von 40 bis 4000 ist und insbesondere von 50 bis 3000 ist.

$R^1$ in (I) ist ein lineares $C_3$-$C_{12}$-Alkylen, oder ein Rest der Formeln a) bis m):

a) $-CH_2CH_2CH(CH_3)-$

b) $-CH_2CH_2OCH_2CH_2OCH_2CN_2-$,

c) $-CH_2CH(CH_3)CH_2CH_2C(CH_3)_2CH_2-$,

d) 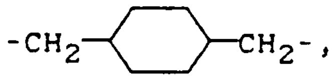 , e) 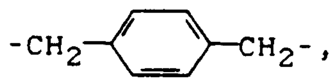 ,

f) 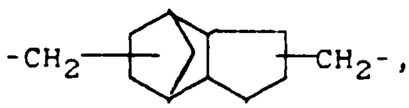 ,

g) 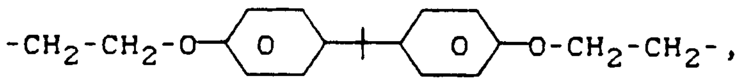 ,

h) 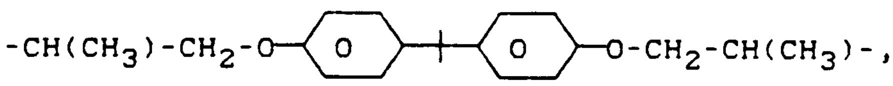 ,

i) 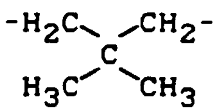 , j) 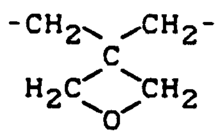 ,

k) 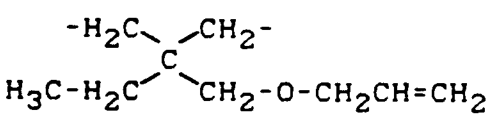 ,

l) 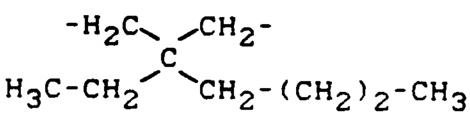 ,

m) $-CH_2-CH_2-O-CH_2-CH_2-$ .

Die aliphatischen Polycarbonate gemäß Komponente 2) können nach üblichen Methoden, z.B. durch Umsetzung oder Phosgenisierung von Diolen (DE-OS 20 01 091, FR-PS 13 91 512, DE-OS 10 31 512, DE-OS 24 46 107, DE-OS 26 05 024, EP 002 641, DE-OS 24 47 349) besser aber durch ringöffnende Masse- und Lösungspolymerisation von cyclischen, aliphatischen Carbonaten hergestellt werden (siehe dazu die deutschen Offenlegungsschriften 15 45 116, 15 45 117, 31 03 135 und 32 04 078).

Das bevorzugte Herstellungsverfahren ist die anionische ringöffnende Lösungspolymerisation von cyclischen aliphatischen Carbonaten bei tiefen Temperaturen gemäß EP-A-0 236 862 (Le A 24 435-EP).

Cyclische aliphatische Carbonate für die Herstellung der erfindungsgemäß einzusetzenden aliphatischen Polycarbonate gemäß Komponente 2) sind Verbindungen der Formel (II):

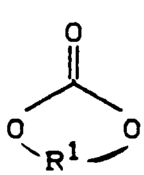 ,

worin

$R^1$ die für Formel (I) genannte Bedeutung mit Ausnahme von "m" hat,
und Verbindungen der Formel (III)

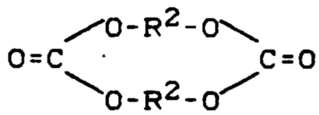 (III),

worin
$R^2$ = ein lineares $C_4$-$C_{12}$-Alkylen der ein Rest der Formeln
m) $-CH_2CH_2OCH_2CH_2-$ oder
b) $-CH_2CH_2OCH_2CH_2OCH_2CH_2-$ ist .

Bevorzugt werden Carbonate der Formel (II) zur Herstellung der erfindungsgemäß einzusetzenden aliphatischen Polycarbonate verwendet. Besonders bevorzugt ist das Carbonat mit $R^1$ =

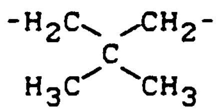

Die erfindungsgemäß zu modifizierenden thermoplastischen aromatischen Polycarbonate gemäß Komponente 1) sind solche auf Basis der Diphenole der Formel (IV)

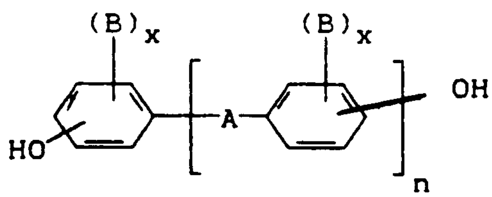 (IV)

worin
"A" eine Einfachbindung, ein $C_1$-$C_5$-Alkylen, ein $C_2$-$C_5$-Alkyliden, ein $C_5$-$C_6$-Cycloalkyliden, -O-, -SO-
,

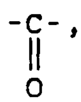

-S-,

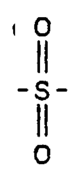

oder ein Rest der Formel (IVa)

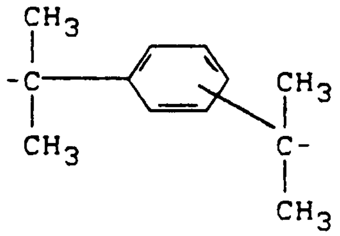

(IVa)

ist,

"B" Chlor, Brom oder Methyl,

"X" 0, 1 oder 2 und "n" 1 oder 0 sind,

und gegebenenfalls zusätzlich der Formel (V)

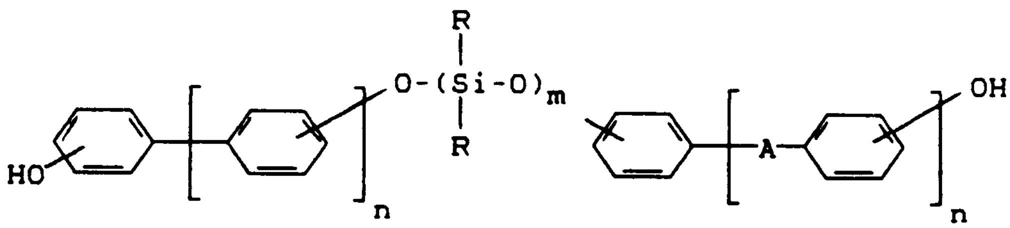

(V)

worin
A und "n" die für Formel (IV) genannte Bedeutung haben, die Reste R gleich oder verschieden sind und lineares $C_1$-$C_{20}$-Alkyl, verzweigtes $C_3$-$C_{20}$-Alkyl, $C_6$-$C_{20}$-Aryl, vorzugsweise $CH_3$, entsprechen und m eine ganze Zahl zwischen 5 und 100, vorzugsweise zwischen 20 und 80 ist.

Die Diphenole der Formel (IV) sind bekannt oder nach bekannten Verfahren herstellbar; Polydiorganosiloxane mit Hydroxy-aryloxy-Endgruppen gemäß Formel (V) sind ebenfalls bekannt (vgl. US-PS 3 419 634) oder nach bekannten Verfahren herstellbar.

Geeignete Diphenole der Formel (IV) sind
Hydrochinon,
Resorcin,
Dihydroxydiphenyle
Bis-(hydroxyphenyl)-$C_1$-$C_5$-alkane,
Bis-(hydroxyphenyl)-$C_5$-$C_6$-cycloalkane,
Bis-(hydroxyphenyl)-ether,
Bis-(hydroxyphenyl)-sulfoxide,
Bis-(hydroxyphenyl)-ketone,
Bis-(hydroxyphenyl-sulfide,
Bis-(hydroxyphenyl)-sulfone und
$\alpha,\alpha'$-Bis-(hydroxyphenyl)-diisopropylbenzole
sowie deren kernchlorierte, kernbromierte oder kernmethylierte Derivate,

Bevorzugte Diphenole der Formel (IV) sind 2,2-Bis-(4-hydroxyphenyl)-propan, 2,2-Bis-(3,5-dimethyl-4-hydroxyphenyl)-propan, 2,4-Bis-(4-hydroxyphenyl)-2-methylbutan, 1,1-Bis-(4-hydroxyphenyl)-cyclohexan, 4,4-Dihydroxyphenylsulfid, 4,4-Dihydroxyphenylsulfon sowie deren di- und tetrabromierte- oder -chlorierte Derivate wie 2,2-Bis-(3-chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan.

Geeignete Diphenole der Formel (V) sind solche, in denen R = Methly, Ethyl, Propyl, n-Butyl, tert.-Butyl oder Phenyl ist, insbesondere solche der Formel (VI)

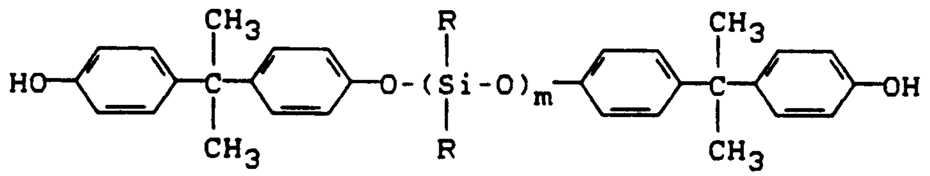 (VI)

worin
die Reste R gleich sind und die vorstehend genannte Bedeutung haben, und m eine ganze Zahl von 5-100, vorzugsweise von 20 bis 80 ist.

Besonders bevorzugtes Diphenol ist 2,2-Bis-(4-hydroxyphenyl)-propan.

Die Diphenole der Formel (V) können z.B. aus den entsprechenden Bis-chlorverbindungen der Formel (VII)

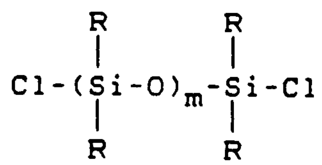 (VII)

und entsprechenden Diphenolen (IV) z.B gemäß US-Patent 3 419 635, Spalte 3, in Kombination mit US-Patent 3 189 662 hergestellt werden.

In den Bis-chlorverbindungen (VII) haben R und m die Bedeutung wie in den Diphenolen (V) bzw. (VI).

Erfindungsgemäß zu modifizierende, aromatische Polycarbonate gemäß Komponente 1) sind Homopolycarbonate aus einem Diphenol und Copolycarbonate aus mehreren Diphenolen, wobei die Diphenole der Formel (V) nur für die Herstellung von Copolycarbonaten mit den Diphenolen der Formel (IV) eingesetzt werden, und zwar in einer Gewichtsmenge von 1-50 Gew.-%, vorzugsweise von 1,5-25 Gew.-% und insbesondere von 2 bis 10 Gew.-%, bezogen auf die Gewichtssumme der eingesetzten Diphenole der Formeln (IV) und (V).

Erfindungsgemäß zu modifizierende, aromatische Polycarbonate gemäß Komponente 1) sind auch Mischungen aus einem Copolycarbonat aus den Diphenolen der Formeln (V) und (IV) und einem anderen siloxanfreien thermoplastischen Polycarbonat, wobei der Gehalt an Diphenolen der Formel (V) in der Polycarbonatmischung, bezogen auf die Gesamtsumme an Diphenolen, wiederum von 1-50 Gew.-% liegt.

Bevorzugte Polycarbonate sind neben dem Bisphenol A-Homopolycarbonat die Copolycarbonate von Bisphenol A mit bis zu 15 Mol-%, bezogen auf die Mol-Summe an Diphenolen, an 2,2-Bis-(3,5-dibrom-4-hydroxyphenyl)-propan.

Die erfindungsgemäß zu modifizierenden, aromatischen Polycarbonate gemäß Komponente 1) können in bekannter Weise verzweigt sein, und zwar vorzugsweise durch den Einbau von 0,05-2,0 Mol-%, bezogen auf die Summe der eingesetzten Diphenole, an drei- oder mehr als dreifunktionellen Verbindungen, z.B. solche mit drei oder mehr als drei phenolischen Gruppen.

Die Herstellung der erfindungsgemäß zu modifizierenden aromatischen Polycarbonate gemäß Komponente 1) ist bekannt und kann z.B. mit Phosgen nach dem Phasengrenzflächenverfahren oder mit Phosgen nach dem Verfahren in homogener Phase ("Pyridinverfahren") erfolgen, wobei das Molekulargewicht durch eine entsprechende Menge an bekannten Kettenabbrechern eingestellt werden kann (bezüglich polydiorganosiloxanhaltiger Polycarbonate siehe DE-OS 3 334 872 (Le A 22 594)).

Die erfindungsgemäß zu modifizierenden, aromatischen Polycarbonate gemäß Komponente 1) haben mittlere Gewichtsmittelmolekulargewichte ($M_w$, gemessen durch Ultrazentrifugation oder Streulichtmessung) von 10.000-200.000, vorzugsweise von 20.000-80.000.

Geeignete Kettenabbrecher zur Einstellung der Molekulargewichte der Polycarbonate gemäß Komponente 1) sind z.B. Phenol, p-Chlorphenol, p-tert.-Butylphenol, 2,4,6-Tribromphenol, langkettige Alkylphenole, wie 4-81,3-(Tetramethylbutyl)-phenol (DE-OS 2 842 005), Monoalkylphenole und Dialkylphenole mit insgesamt 8-20 C-Atomen in den Alkylsubstituenten, wie 3,5-di-tert.-Butylphenol, p-Isooctylphenol, p-tert.-Octylphenol, p-Dodecylphenol und 2-(3,5-Dimethyl-heptyl)-phenol und 4-(3,5-Dimethyl-heptyl)-phenol(DE-OS 3 506 472).

Die Menge an Kettenabbrecher ist bekannt und beträgt zwischen 0,5 Mol-% und 10 Mol-%, bezogen auf die Molsumme der jeweils eingesetzten Diphenole.

Die erfindungsgemäßen Polycarbonatmischungen können weitere, für Polycarbonate bekannte Zusätze wie Stabilisatoren, Pigmente, Entformungsmittel, Flammschutzmittel und/oder Antistatika, in den üblichen Mengen enthalten.

Die erfindungsgemäßen Polycarbonatmischungen enthaltend die Komponenten 1) und 2) und gegebenenfalls Stabilisatoren, Pigmente, Entformungsmittel, Flammschutzmittel und/ode Antistatika können hergestellt werden, indem man ihre Bestandteile in bekannter Weise vermischt und bei Temperaturen von 200-330 ° C in üblichen Mischvorrichtungen, wie Innenknetern, Extrudern oder Doppelwellenschnecken, schmelzcompoundiert oder schmelzextrudiert.

Gegenstand der vorliegenden Erfindung ist somit auch ein Verfahren zur Herstellung von thermoplastischen Polycarbonatmischungen enthaltend die Komponenten 1), 2) und gegebenenfalls Stabilisatoren, Pigmente, Entformungsmittel, Flammschutzmittel und/oder Antistatika, das dadurch gekennzeichnet ist, daß man die Komponente 1), 2) und gegebenenfalls Stabilisatoren, Pigmente, Entformungsmittel, Flammschutzmittel und/oder Antistatika in bekannter Weise vermischt und danach bei Temperaturen von 200 ° C bis 330 ° C in üblichen Mischvorrichtungen schmelzcompoundiert oder schmelzextrudiert.

Die Bestandteile können in bekannter Weise sowohl sukzessive als auch simultan vermischt werden bei etwa 20 ° C (Raumtemperatur) und auch bei höherer Temperatur.

Die Polycarbonatmischungen der vorliegenden Erfindung können zur Herstellung von Formkörpern jeder Art verwendet werden. Insbesondere können Formkörper durch Spritzguß hergestellt weden. Beispiele für herstellbare Formkörper sind Gehäuseteile jeder Art, z.B. für Haushaltsgeräte oder Platten für den Bausektor.

Beispiele:

Komponenten

1.

Polycarbonat auf Basis Bisphenol A mit einer relativen Lösungsviskosität $\eta$rel von 1,26 -1,28, gemessen in $CH_2Cl_2$ bie 25 ° C und einer Konzentration von 0,5 g/100ml.

2.1

Aliphatisches Polycarbonat auf Basis von Neopentylalkohol (2,2-Dimethyl-propandiol (1,3)), erhalten durch ringöffende anionische Polymerisation von Neopentylglykolcarbonat mit einer relativen Lösungsviskosität $\eta$rel von 1,95 (2 gew.-%ige Lösung in $CH_2Cl_2$ bei 20 ° C). Mw = 45 000 g/mol.

2.2

Aliphatisches Polycarbonat auf Basis von Neopentylalkohol (2,2-Dimethyl-propandiol (1,3)), erhalten durch ringöffnende anionische Polymerisation von Neopentylglykolcarbonat mit einer relativen Lösungsviskosität $\eta$rel von 2,37 (2 gew.-%ige Lösung in $CH_2Cl_2$ bei 20 ° C). Mw = 95 000 g/mol.

2.3

Aliphatisches Polycarbonat auf Basis von Neopentylalkohol (2,2-Dimethyl-propandiol (1,3)), erhalten durch ringöffnende anionische Polymerisation von Neopentylglykolcarbonat mit einer relativen Lösungsviskosität $\eta$rel von 4,08 (2 gew.-%ige Lösung in $CH_2Cl_2$ bei 20 ° C). Mw = 180 000 g/mol.

2.4

Aliphatisches Polycarbonat auf Basis von Neopentylalkohol (2,2-Dimethyl-propandiol (1,3)), erhalten durch ringöffende anionische Polymerisation von Neopentylglykolcarbonat mit einer relativen Lösungsviskosität $\eta$rel von 5,60 (2 gew.-%ige Lösung in $CH_2Cl_2$ bei 20 ° C). Mw = 250 000 g/mol.

3

Phosphorigsäureester des Bis(2-hydroxy-3-cyclohexyl)-5-methyl-phenyl)methans als Stabilisator.

Die Molekulargewichte (Mw) der Komponenten 2.1 bis 2.4 wurden durch Gelpermeationschromatographie auf Grundlage einer Eichkurve für Polyneopentylglykolcarbonat bestimmt.

Die Komponenten wurden in einem 1,3 Liter Innenkneter compoundiert.

Die Prüfkörper wurden mit einer Spritzgußmaschine bei 260 °C hergestellt.

Die Kerbschlagzähigkeit wurde an Stäben der Abmessung 50 x 6 x 4 mm (Normkleinstab) bei RT gemäß DIN 53 453 bestimmt. (Massetemperatur: 260 °C).

Die Wärmeformbeständigkeit nach Vicat (Methode B) wurde gemäß DIN 53 460 bestimmt.

Die Fließfähigkeit der Materialien wurde beurteilt über den bei der verwendeten Spritzgußmaschine (Massetemperatur: 260 °C) notwendigen Fülldruck zur Herstellung der Prüfkörper (s. Johannaber, Kunststoffe 74 (1984), 1; s. 1-5).

Die Zusammensetzung der geprüften Materialien sowie die erhaltenen Daten sind in den folgenden Tabellen zusammengefaßt.

**Tabelle**

Zusammensetzung:

| Komponenten | erfindungsgemäße Beispiele (Gew.-Teile) | | | Vergleichs-bespiel (Gew.-Teile) | |
|---|---|---|---|---|---|
| | 1 | 2 | 3 | 4 | 5 |
| 1 | 90 | 90 | 90 | 90 | 100 |
| 2.1 | 10 | - | - | - | - |
| 2.2 | - | 10 | - | - | - |
| 2.3 | - | - | 10 | - | - |
| 2.4 | - | - | - | 10 | - |
| 3 | 0,25 | 0,25 | 0,25 | 0,25 | 0,25 |

| Prüfungen: | 1 | 2 | 3 | 4 | 5 |
|---|---|---|---|---|---|
| Kerbschlagzähigkeit $a_k$(RT) (KJ/m²) (260° C Massetemperatur) | 47 | 46 | 54 | 52 | 22 |
| Wärmeformbeständigkeit Vicat B (120) (°C) | 136 | 136 | 140 | 139 | 145 |
| Fülldruck bei 260° C (bar) | 71 | 82 | 97 | 105 | 156 |

**Patentansprüche**

1. Thermoplastische Polycarbonatmischungen enthaltend
   1.) thermoplatische, aromatische Polycarbonate und
   2.) aliphatische Polycarbonate mit Gewichtsmittelmolekulargewichten $\overline{M}w$ (gemessen mittels Ultrazentrifugation oder Lichtstreuung) von 15.000 bis 500.000.

**2.** Polycarbonatmischungen gemäß Anspruch 1, dadurch gekennzeichnet, daS das $\overline{M}w$ der aliphatischen Polycarbonate zwischen 20.000 und 400.000 liegt.

**3.** Polycarbonatmischungen gemäß Anspruch 1, dadurch gekennzeichnet, daß die Komponente 1) in Mengen von 30 Gew.-% bis 98 Gew.-% und die Komponente 2) in Mengen von 70 Gew.-% bis 2 Gew.-% enthalten ist, bezogen auf die Gewichtssumme aus den Komponenten 1) + 2).

**4.** Polycarbonatmischungen gemäß Anspruch 3, dadurch gekennzeichnet, daß die Komponente 1) in Mengen von 55 Gew.-% bis 97 Gew.-% und die Komponente 2) in Mengen von 45 Gew.-% bis 3 Gew.-% enthalten ist.

**5.** Polycarbonatmischungen gemäß Anspruch 3, dadurch gekennzeichnet, daß die Komponente 1) in Mengen von 75 Gew.-% bis 97 Gew.-% und die Komponente 2) in Mengen von 25 Gew.-% bis 3 Gew.-% enthalten ist.

**6.** Polycarbonatmischungen gemäß Anspruch 1, dadurch gekennzeichnet, daß die aliphatischen Polycarbonate gemäß Komponente 2) der Formel (I)

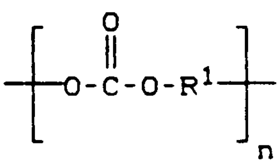 (I),

entsprechen, worin "n" eine ganze Zahl größer 40 ist und worin "$R^1$" ein lineares $C_3$-$C_{12}$-Alkylen oder ein Rest der Formeln a) bis m)
a) $-CH_2CH_2CH(CH_3)-$
b) $-CH_2CH_2OCH_2CH_2OCH_2CH_2-$,
c) $-CH_2CH(CH_3)CH_2CH_2C(CH_3)_2CH_2-$,

d) 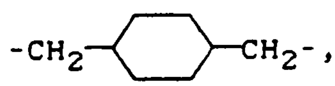 , e) 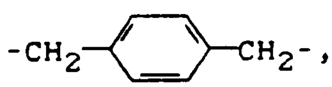 ,

f) 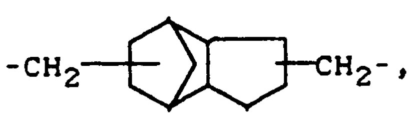 ,

g) 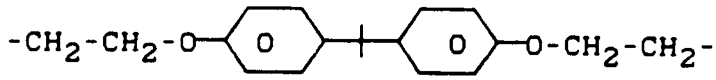 ,

h) 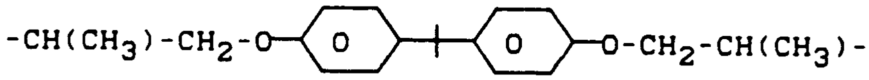 ,

i) 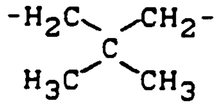 , j) 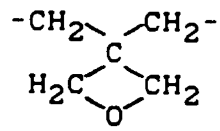 ,

k) 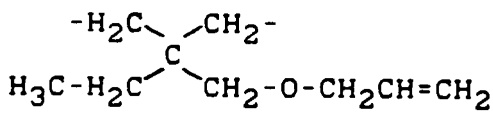 ,

l) 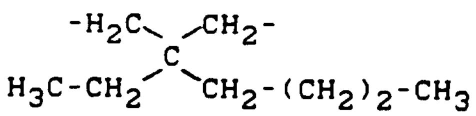 ,

m) $-CH_2-CH_2-O-CH_2-CH_2-$ ist.

**7.** Polycarbonatmischungen gemäß Anspruch 1, dadurch gekennzeichnet, daß die Komponente 1) ein $\overline{M}w$ (Gewichtsmittelmolekulargewicht, gemessen durch Ultrazentrifugation oder Streulichtmessung) von 10.000 bis 200.000 hat.

**8.** Polycarbonatmischungen gemäß Anspruch 1, dadurch gekennzeichnet, daß sie zusätzlich Stabilisatoren, Pigmente, Entformungsmittel, Flammschutzmittel und/oder Antistatika enthalten.

**9.** Verfahren zur Herstellung der Polycarbonatmischungen der Ansprüche 1 bis 8, dadurch gekennzeichnet, daß man die Komponenten 1), 2) und gegebenenfalls Stabilisatoren, Pigmente, Entformungsmittel, Flammschutzmittel und/oder Antistatika in bekannter Weise vermischt und danach bei Temperaturen von 200 ° C bis 330 ° C in üblichen Mischvorrichtungen schmelzcompoundiert oder schmelzextrudiert.

## Claims

**1.** Thermoplastic polycarbonate mixtures containing
1.) thermoplastic aromatic polycarbonates and
2.) aliphatic polycarbonates having weight average molecular weights $\overline{M}w$ (as measured by ultracentrifugation or light scattering) in the range from 15,000 to 500,000.

**2.** Polycarbonate mixtures as claimed in claim 1, characterized in that the $\overline{M}w$ of the aliphatic polycarbonates is between 20,000 and 400,000.

**3.** Polycarbonate mixtures as claimed in claim 1, characterized in that component 1) is present in quantities of from 30% by weight to 98% by weight and component 2) in quantities of 70% by weight to 2% by weight, based on the total weight of components 1) + 2).

**4.** Polycarbonate mixtures as claimed in claim 3, characterized in that component 1) is present in quantities of 55% by weight to 97% by weight and component 2) in quantities of 45% by weight to 3% by weight.

**5.** Polycarbonate mixtures as claimed in claim 3, characterized in that component 1) is present in quantities of 75% by weight to 97% by weight and component 2) in quantities of 25% by weight to 3% by weight.

**6.** Polycarbonate mixtures as claimed in claim 1, characterized in that the aliphatic polycarbonates of component 2) correspond to formula (I)

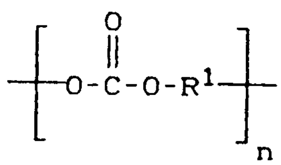 (I)

in which n is an integer of greater than 40 and $R^1$ is a linear $C_3$-$C_{12}$ alkylene radical or a radical corresponding to formulae a) to m) below

a) $-CH_2CH_2CH(CH_3)-$

b) $-CH_2CH_2OCH_2CH_2OCH_2CH_2-$,

c) $-CH_2CH(CH_3)CH_2CH_2C(CH_3)_2CH_2-$,

d) 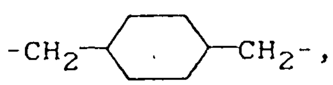, e) 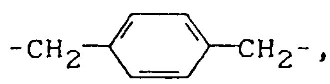,

f) 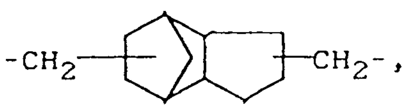,

g) 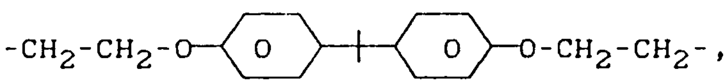,

h) 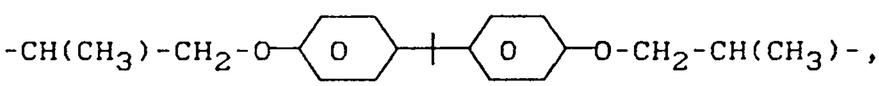,

i) 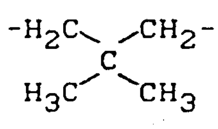, j) 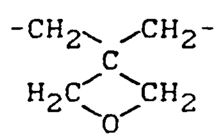,

k) 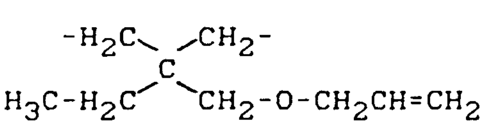,

l) 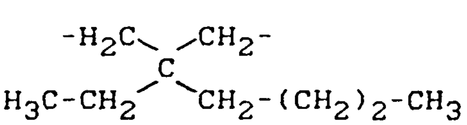,

m) $-CH_2-CH_2-O-CH_2-CH_2-$

**7.** Polycarbonate mixtures as claimed in claim 1, characterized in that component 1) has an $\overline{M}w$ (weight average molecular weight, as measured by ultracentrifugation or scattered light measurement) of from 10,000 to 200,000.

**8.** Polycarbonate mixtures as claimed in claim 1, characterized in that they additionally contain stabilizers, pigments, mold release agents, flameproofing agents and/or antistatic agents.

**9.** A process for the production of the polycarbonate mixtures claimed in claims 1 to 8, characterized in that components 1), 2) and, optionally, stabilizers, pigments, mold release agents, flameproofing agents and/or antistatic agents are mixed in known manner and the resulting mixture is melt-compounded or melt-extruded in standard mixing units at temperatures of 200 °C to 330 °C.

**Revendications**

**1.** Mélanges thermoplastiques de polycarbonates contenant
1.) des polycarbonates aromatiques thermoplastiques et
2.) des polycarbonates aliphatiques ayant des moyennes pondérales $\overline{M}_p$ du poids moléculaire (mesurées par ultracentrifugation ou diffusion de la lumière) de 15 000 à 500 000.

**2.** Mélanges de polycarbonates suivant la revendication 1, caractérisés en ce que la valeur $\overline{M}_p$ des polycarbonates aliphatiques se situe entre 20 000 et 400 000.

**3.** Mélanges de polycarbonates suivant la revendication 1, caractérisés en ce que le composant 1) est contenu en quantités de 30 à 98 % en poids et le composant 2) est contenu en quantités de 70 à 2 % en poids par rapport à la somme des poids des composants 1) + 2).

**4.** Mélanges de polycarbonates suivant la revendication 3, caractérisés en ce que le composant 1) est contenu en quantités de 55 à 97 % en poids et le composant 2) est contenu en quantités de 45 à 3 % en poids.

**5.** Mélanges de polycarbonates suivant la revendication 3, caractérisés en ce que le composant 1) est contenu en quantités de 75 à 97 % en poids et le composant 2) est contenu en quantités de 25 à 3 % en poids.

**6.** Mélanges de polycarbonates suivant la revendication 1, caractérisés en ce que les polycarbonates aliphatiques représentant le composant 2) répondent à la formule (I)

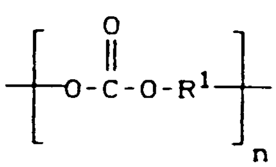

(I),

dans laquelle "n" est un nombre supérieur à 40 et "$R^1$" est un groupe alkylène linéaire en $C_3$ à $C_{12}$ de formules a) à m)
a) $-CH_2CH_2CH(CH_3)-$
b) $-CH_2CH_2OCH_2CH_2OCH_2CH_2-$,
c) $-CH_2CH(CH_3)CH_2CH_2C(CH_3)_2CH_2-$,

d) 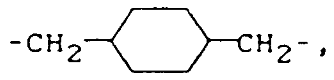 e) 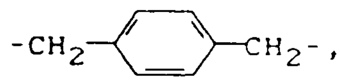

f) 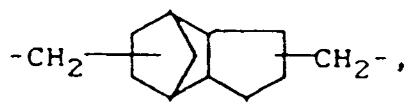

g) 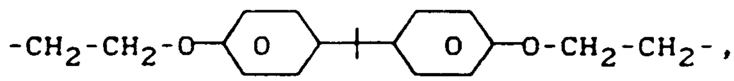

h) 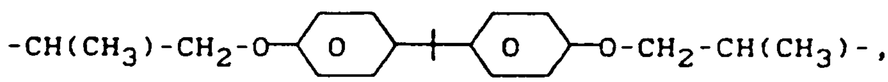

i) 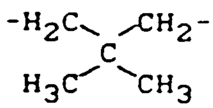 , j) 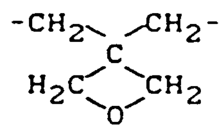 ,

k) 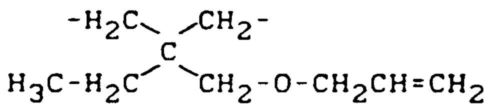 ,

l) 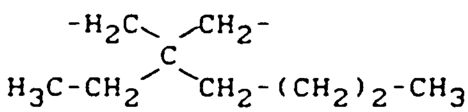 ,

m) $-CH_2-CH_2-O-CH_2-CH_2-$.

**7.** Mélanges de polycarbonates suivant la revendication 1, caractérisés en ce que le composant 1) a une valeur $\overline{M}_p$ (moyenne pondérale du poids moléculaire mesurée par ultracentrifugation ou par diffusion de la lumière) de 10 000 à 200 000.

**8.** Mélanges de polycarbonates suivant la revendication 1, caractérisés en ce qu'ils contiennent en outre des agents stabilisants, des pigments, des agents de démoulage, des agents retardateurs de flamme et/ou des agents antistatiques.

**9.** Procédé de production de mélanges de polycarbonates suivant les revendications 1 à 8, caractérisé en ce qu'on mélange les composants 1), 2) et le cas échéant des agents stabilisants, des pigments, des agents de démoulage, des agents retardateurs de flamme et/ou des agents antistatiques d'une manière connue puis on les formule à l'état fondu on on les extrude à l'état fondu à des températures de 200 à 330 °C dans des dispositifs mélangeurs classiques.